# EUROPEAN PATENT APPLICATION

(11) **EP 2 017 165 A1**
(43) Date of publication of application: **21.01.2009**
(21) Application number: 08166311.4
(22) Date of filing: 30.10.2006
(51) Int. Cl.: B62D 53/12

(54) **A device for coupling a semi-trailer to a tractor**

(62) Divisional of application: 06425749.6
(71) Applicant: ONE CONTACT S.R.L, 25020 Flero (Brescia) (IT)
(72) Inventor: Mascialino, Claudio, 25080, MAZZANO (IT)
(74) Representative: Tansini, Elio Fabrizio

(57) **Abstract**

A device for coupling a semi-trailer to a tractor comprises a knuckle pin or kingpin (2) having an anchoring portion (3) adapted to be fixed to a semi-trailer chassis and a head (8) projecting downwards relative to a rest plane of the semi-trailer, to be operatively engaged by the fifth wheel of the tractor, a coupling member rotatably engaged around a geometric axis (X) of the kingpin (2) and carrying connecting terminals (16) of a feeding line from the tractor, distribution lines (15) each extending from one of the connecting terminals (16) and each connectable to a user device of the semi-trailer. Each distribution line (15) has a proximal length (18) extending from the respective connecting terminal (16) towards the kingpin (2), an intermediate length (20) rising up on the continuation of the proximal length (18) to pass through the rest plane of the semi-trailer on the fifth wheel, and a distal length (19) connectable to the user, extending in the continuation of the intermediate length (20) away from the kingpin (2).

## Description

The present invention relates to a device for coupling a semi-trailer to a tractor, of the type comprising the features set out in the preamble of claim 1.

The invention also relates to a semi-trailer carrying said device and to a fifth wheel for articulated lorries carrying a connector susceptible of being interfaced with said coupling device.

There are articulated lorries usually designed for goods transport, in which the semi-trailer is coupled to a tractor by means of a device comprising a knuckle pin known in this particular technical field as "kingpin" and projecting from the semi-trailer at the lower part thereof, at the front, for engagement with a fifth wheel carried by the tractor. When coupling is to be carried out, the tractor moves backwards towards the semi-trailer so that the kingpin can be introduced into a V-shaped lead-in portion provided in the rear part of the fifth wheel and slide along the lead-in portion itself until engagement in an engagement seat. Operating in the engagement seat is a mechanical coupling system retaining the kingpin while the kingpin is still free to rotate about a vertical axis to enable the semi-trailer to follow the bends run by the motor-vehicle. Usually, the fifth wheel is rotatably mounted on the tractor around a horizontal axis perpendicular to the moving-forward direction of the vehicle or is supported by elastic bumpers to compensate for the inclinations of the tractor relative to the semi-trailer, due to the road undulations. On the other hand, a backlash is always present between the kingpin and the fifth wheel seat, which backlash is capable of allowing relative shiftings both vertically along the geometric axis of the kingpin itself, and horizontally along directions radial to the geometric axis. Said backlash further enables inclination of the pin relative to the fifth wheel seat.

Coupling of the semi-trailer to the tractor also requires arrangement of different electric and/or pneumatic connections, to allow feeding of the braking system, the signal light devices and other electrically or pneumatically operated apparatus installed on board the semi-trailer.

In the commonest embodiments, these couplings are carried out by pipes and helical coil cables that are manually connected and disconnected by an operator, each time coupling or uncoupling of a semi-trailer to and from the tractor is required.

In order to eliminate the requirement of helical coil cables and/or simplifying the semi-trailer coupling/uncoupling operations, different systems to enable an automatic connection of the electric and/or pneumatic feeding lines between tractor and semi-trailer have been also proposed.

For instance, EP-0084712 proposes a device exploiting the V-shaped lead-in portion of the fifth wheel for rotatable orientation of a coupling member mounted under the flatbed of the semi-trailer, around the geometric axis of the kingpin, so as to align it and prepare it for engagement with a connector carried by the tractor close to the fifth wheel. When engagement has occurred, the connector is radially interposed between the kingpin and the coupling member suitably spaced apart from the kingpin itself.

WO-03/039940 discloses a device similar to the above one, with a coupling member radially extending from the kingpin. Disposed on one side of the coupling member are terminals of the distribution lines provided on the semi-trailer, connectable with the feeding lines coming from the tractor by means of a connector integrated into the fifth wheel and movable transversely of the V-shaped lead-in portion.

In document WO-2005/110836 it is disclosed a device in which the coupling member insertable into the V-shaped lead-in portion of the fifth wheel carries connecting terminals oriented towards the kingpin and designed to engage, simultaneously with introduction of the kingpin into the engagement seat provided in the fifth wheel, a connector fastened to the fifth wheel itself at an underlain position relative to the coupling mechanisms of the kingpin.

The Applicant has however noticed that in the coupling devices of the above described type different problems in terms of safety, operating reliability and construction simplicity remain unsolved.

In particular, in accordance with the Applicant's perception, one of the causes for said problems resides in that the cables or ducts constituting the electric and pneumatic distribution lines leading to the coupling member necessarily have exposed lengths extending under the semi-trailer, as far as a fastening position at which the branching-off elements for connection to the respective user apparatus installed on the semi-trailer itself can be prepared.

Said exposed lengths of the distribution lines greatly limit the possibility of installing other members or devices in the spaces under the semi-trailer. In addition, the exposed lengths may be subjected to accidental contacts with the wheels or other parts of the tractor in case of relative shiftings taking place between said tractor and the semi-trailer during running and manoeuvring. This risk is particularly increased by the fact that, exactly for being able to compensate for the relative oscillations and shiftings between tractor and semi-trailer, said lengths of the distribution lines must necessarily be much longer than the distance existing between the coupling member and the position for fastening to the semi-trailer. Therefore, particular construction expedients, which are in many cases different depending on the type of semi-trailer used, must be adopted to limit the above described risks as much as possible, which will bring about rises in costs and weight and a greater construction complexity.

Another factor affecting the operating reliability of the manufacturing solutions proposed by the known art consists in that the connector carrying the feeding lines coming from the tractor remains mechanically secured to the fifth wheel even after coupling with the coupling member carried by the kingpin. This circumstance inevitably gives rise to important stresses on the connector, the coupling member and the mechanical components associated therewith, following the unavoidable fluctuations occurring between fifth wheel and kingpin during running.

In accordance with the present invention, the above described problems are overcome by providing distribution lines having a proximal length extending from the connecting terminals radially to the kingpin, an intermediate length extending parallel to the geometric axis of the kingpin through the rest plane of the semi-trailer on the fifth wheel and a distal length extending in the thickness of the semi-trailer chassis, away from the kingpin, and forming a loop compensating for angular rotations of the coupling member relative to the semi-trailer about the geometric axis of the kingpin.

More particularly, it is an object of the invention to provide a coupling device between a semi-trailer and a tractor, comprising: a kingpin having an anchoring portion to be fastened to a chassis of a semi-trailer and a head projecting downwards relative to a rest plane of the semi-trailer, to be operatively engaged by a fifth wheel carried by a tractor; a coupling member rotatably engaged around a geometric axis of the kingpin and carrying connecting terminals each connectable to a feeding line coming from the tractor; distribution lines each extending from one of the connecting terminals and each connectable to a user device carried by the semi-trailer; characterised in that each of said distribution lines has a proximal length extending from the respective connecting terminal to the kingpin, an intermediate length rising up on the continuation of the proximal length to pass through the rest plane of the semi-trailer on the fifth wheel, and a distal length connectable to said user device and extending in the continuation of the intermediate length away from the kingpin.

It is a further object of the invention to provide an articulated lorry integrating the above specified coupling device, as well as a fifth wheel carrying a connector to be engaged with said device, preferably by automatic actuation members.

Preferably, in at leas one of the above aspects, the present invention further comprises one or more of the following features.

The intermediate length of the distribution lines is disposed close to the kingpin, more preferably to a distance less than 100 mm from the geometric axis of the kingpin.

A diametrically external surface of the anchoring portion of the kingpin has a threading for operative engagement with a base body rigidly connectable to a chassis of the semi-trailer, above said rest plane.

The intermediate length of the distribution lines is formed through an annular element extending around the kingpin.

Said annular element is integral with the coupling member and rotatably engaged around the kingpin.

Said coupling member comprises a box-shaped body to be engaged by fitting in a radial direction with the kingpin in a V-shaped lead-in portion directed towards an engagement seat provided in the fifth wheel for engagement of the kingpin itself.

The coupling member, between the connecting terminals and the kingpin has a longitudinal portion extending radially relative to the kingpin, and of a size in height smaller than the axial extension of a base portion of the head of the kingpin extending between said anchoring portion and a coupling portion of reduced diameter of the head itself.

The connecting terminals carried by the coupling member are oriented radially away from the kingpin.

Said distribution lines comprise electric conductors terminating at said connecting terminals, the intermediate lengths of the distribution lines themselves being engaged through at least one elbow-shaped connecting element rotatably in engagement relative to the coupling member.

The electric conductors in the distal length of said distribution lines extend from the elbow-shaped connecting element along a path of arched conformation, to follow relative angular rotations between the coupling member and the kingpin around said geometric axis.

Said distribution lines comprise at least one pneumatic duct, wherein at least one of said proximal length and distal length communicates with the intermediate length by a connecting groove extending concentric with the geometric axis of the kingpin, to maintain a fluid communication between the proximal length and the distal length of the respective distribution line in the presence of angular rotations of the coupling member relative to the kingpin.

At least one first connecting groove and a second connecting groove extending concentric with the geometric axis of the kingpin so that each of them maintains a fluid communication between the proximal length and the distal length of a respective distribution line.

A discharge duct communicating with the external atmosphere and with a vent gap defined between a first and a second pair of sealing rings, each operatively interposed between one of said first and second connecting grooves and the vent gap itself.

Spring means to resist relative angular rotations between the coupling member and the kingpin around said geometric axis.

Said spring means operates on a return rope having one end engaged at a fixed anchoring point relative to the coupling member.

The return rope extends along a U-shaped path around at least one idler pulley movable against said spring means following said angular rotations.

A connector carrying fitting seats each connectable to one of said feeding lines, said connector being susceptible of engagement with the coupling member through sliding in a radial direction towards the kingpin, to couple the fitting seats on the respective connecting terminals.

A gripping element to be removably engaged with the connector, and actuating members operating on the gripping element to take the connector between a work condition, at which said fitting seats are each operatively engaged with one of the connecting terminals carried by the coupling member, and a rest condition at which the connector is disengaged from the coupling member.

Said actuating members comprise:
- first actuators to cause translation of the coupling member in parallel to an insertion direction of the fitting seats on the connecting terminals;
- second actuators to cause translation of the coupling member in a direction perpendicular to said insertion direction.

The actuating members are fixed relative to the fifth wheel.

A protection element that is fixed relative to the fifth wheel and is adapted to be operatively engaged by the connector in the rest condition.

Actuation of the connector between the work condition and rest condition substantially takes place along a C-shaped path in a vertical plane.

Latching devices operatively carried by the coupling member to retain the connector in the work condition.

Said latching devices are oscillatably secured to the coupling member and movable upon the action of the gripping element to release the connector from the coupling member.

Devices for locking the connector on the gripping element.

Said locking devices are oscillatably carried by the gripping element and movable upon the action of a locating element carried by the coupling member to disengage the gripping element from the connector (45) in the work condition.
Further features and advantages will become more apparent from the following detailed description of a preferred, but not exclusive, embodiment of a device for coupling a semi-trailer to a tractor, according to the present invention. This description will be set out hereinafter with reference to the accompanying drawings given by way of non-limiting example, in which:
- Fig. 1 diagrammatically shows a fragmentary longitudinal cross-section of a coupling device in accordance with the present invention, operating with the chassis of a semi-trailer in engagement with a fifth wheel carried by a tractor;
- Fig. 2 is a fragmentary bottom view of the device seen in Fig. 1, with some parts removed to better show the components housed within the semi-trailer chassis;
- Fig. 3 shows a detail of the device in question to an enlarged scale, in which intermediate lengths of the pneumatic branching-off or distribution lines provided in the semi-trailer are highlighted;
- Fig. 4 is a perspective view of a connector associated with the electric and pneumatic lines coming from the tractor;

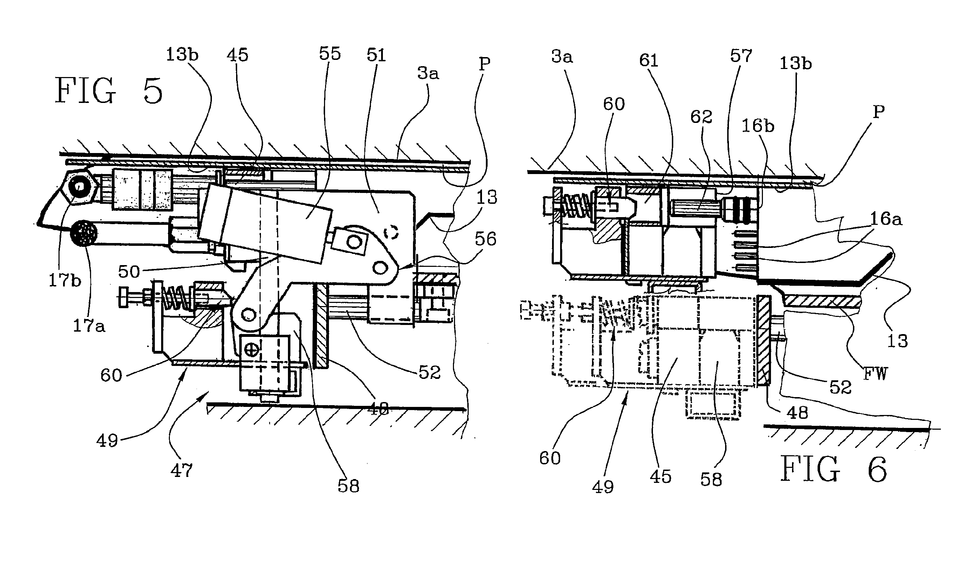

- Fig. 5 shows a detail of the device in question to an enlarged scale, showing a connector connectable to the branching-off lines upon command of coupling members;
- Fig. 6 is a view similar to that in Fig. 4 showing different intermediate positions of the connector movements;

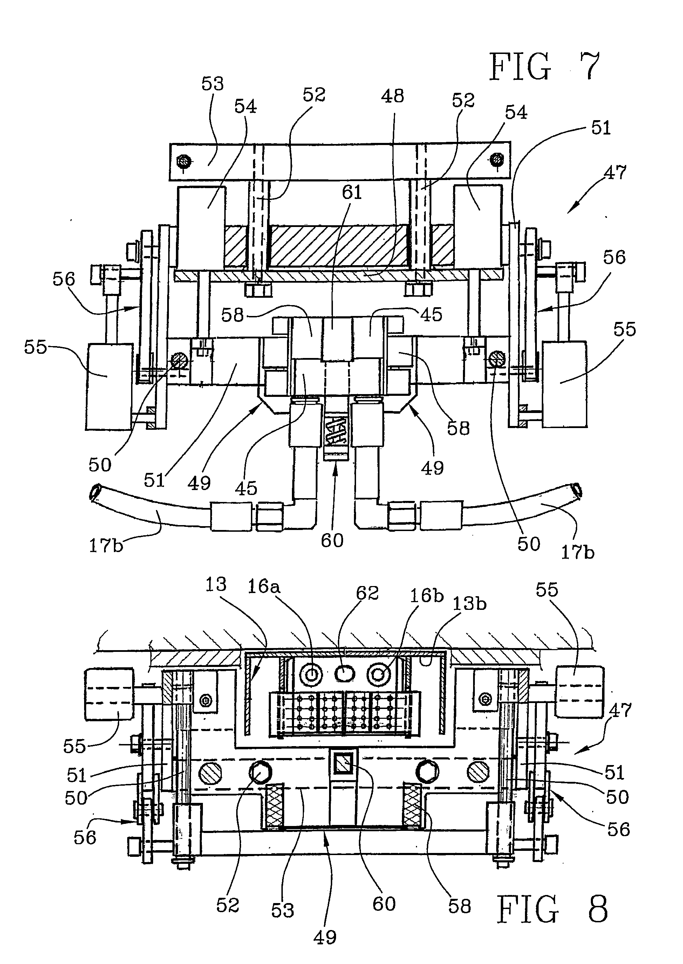

- Fig. 7 is a diagrammatic top view of actuation members operating on the connector;
- Fig. 8 is a fragmentary front view showing the actuation members;
- Fig. 9 shows an enlarged detail highlighting a coupling element during engagement on the connector;
- Fig. 10 shows the coupling element seen in Fig. 6 during disengagement from the connector.

With reference to the drawings, the device for coupling a semi-trailer to a tractor in accordance with the present invention has been generally identified with reference numeral 1. The device 1 is suitable for use for operatively coupling a tractor carrying a so-called "fifth wheel" denoted with FW, to a semi-trailer having a lower surface turned downwards to define a rest plane P on an upper surface of the fifth wheel FW. Tractor and semi-trailer are not shown in the accompanying drawings because they can be manufactured in a manner known by itself. Rigidly in engagement with the rest plane P of the semi-trailer is a knuckle pin 2 usually referred to as "kingpin", which has an anchoring portion 3 to be fastened to a chassis 3a of the semi-trailer. Preferably, the anchoring portion 3 has a threading 4 formed on a diametrically external portion thereof, so as to allow the kingpin 2 to be engaged by screwing with a substantially disc-shaped base body 5, susceptible of rigid engagement with an anchoring plate 6 welded between two transverse ribs 7 of the semi-trailer chassis 3a, in coplanar relationship with upper surfaces of the ribs themselves.

Engagement of the kingpin 2 through screwing down of the threaded anchoring portion 3 enables the diametrical dimensions of the pin itself to be reduced as compared with known construction solutions, so as to promote compacting of the components of the device in question around the pin itself.

Projecting from the anchoring portion 3 of the kingpin 2, at a lower part relative to the rest place P coincident with the lower surface of the semi-trailer, is a head 8 to be operatively engaged in an engagement seat 9 provided in the fifth wheel FW. In more detail, the head 8 of the kingpin 2 has a base portion 10 extending from the anchoring portion 3 according to a diameter corresponding to the diameter of the engagement seat 9. Extending from the end of the base portion 10 is a coupling portion 11 of reduced diameter, susceptible of operative engagement by a coupling mechanism 12 usually provided in the fifth wheel FW to retain the kingpin 2 in the engagement seat 9.

The fifth wheel FW is usually provided with a substantially V-shaped lead-in portion converging in the engagement seat 9 to allow and guide radial insertion of the kingpin 2 into the seat 9 on engagement of the semi-trailer onto the tractor. When coupling has occurred, the rest plane P of the semi-trailer acts in sliding contact relationship on the upper surface of the fifth wheel FW, to follow angular rotations of the tractor relative to the semi-trailer, around the geometric axis X of the kingpin 2 retained by the coupling mechanism 12. Rotatably engaged around the geometric axis X of the kingpin 2 is a coupling member 13 essentially comprising a box-shaped body 14 the shape of which substantially matches that of the V-shaped notch 9a and being susceptible of engagement thereinto, through insertion in the radial direction relative to the kingpin 2 itself. When engagement has been completed, the coupling member 13 therefore keeps a fixed positioning inside the V-shaped lead-in portion of the fifth wheel FW, and rotates around the kingpin 2 together with the fifth wheel FW during the steering operations carried out by the articulated lorry.

Electric 15a and/or pneumatic 15b distribution lines are at least partly integrated into the coupling device 13 and they lend themselves to be connected with respective user devices installed on board the semi-trailer, such as lighting, signalling and cooling installations, braking system, etc. The distribution lines 15a, 15b extend starting from respective connecting terminals 16a, 16b projecting at the rear from a supporting base 13a carried by the coupling member 13.

In more detail, electric distribution lines 15a are preferably provided which comprise respective conductors that are mutually insulated, as well as two pneumatic distribution lines 16a comprising respective ducts.

As better described in the following the connecting terminals 16a, 16b radially oriented away from the kingpin 2, are adapted to be each connected with a respective electric feeding 17a or pneumatic 17b line coming from the tractor, to allow operation of the user devices mounted on the semi-trailer.

Each of the distribution lines, be it an electric 15a or pneumatic 15b line, advantageously extends in a path comprising a proximal length 18 extending from the respective connecting terminal 16a, 16b towards the kingpin 2, and a distal length 19a, 19b extending away from the kingpin 2 and suitable for connection with the respective user device. The proximal length 18a, 18b and the distal length 19a, 19b are mutually connected by an intermediate length 20a, 20b rising up on the extension of the proximal length 18a, 18b to pass through the rest plane P of the semi-trailer on the fifth wheel FW. Consequently, the distal length 19a, 19b is housed within the semi-trailer, preferably in the space of the chassis 3a included between said rest plane P and the anchoring plate 6, while the proximal length 18a, 18b of each distribution line 15a, 15b is housed in a longitudinal portion 21 of the coupling member 13, radially extending relative to the kingpin 2 between the supporting base 6 and the kingpin itself. This longitudinal portion 21 preferably has a size in height to be measured in parallel to the geometric axis X, smaller than the axial extension of the base portion 10 of the head 8 of the kingpin 2. Thus it is possible to be sure that the longitudinal portion 21 of the coupling member 13 will maintain a size in height smaller than the distance existing between the coupling mechanism 12 of the fifth wheel FW and the rest plane P of the semi-trailer. This configuration makes the longitudinal portion 21 of the coupling member 13 extend into the V-shaped lead-in portion of the fifth wheel FW above the coupling mechanism 12, until in close proximity to the kingpin 2, so as to enable the intermediate lengths 20a, 20b of the branching-off or distribution lines 15a, 15b to move close to the kingpin 2 itself.

Advantageously, the intermediate lengths 20a, 20b of the distribution lines 15a, 15b can be positioned close to the kingpin 2, just as an indication to a distance that does not exceed 100 mm from the geometric axis X, so that the effects of the relative rotations between the semi-trailer and coupling member 13 that keeps immobile with respect to the fifth wheel FW during articulation between semi-trailer and tractor can be minimised.

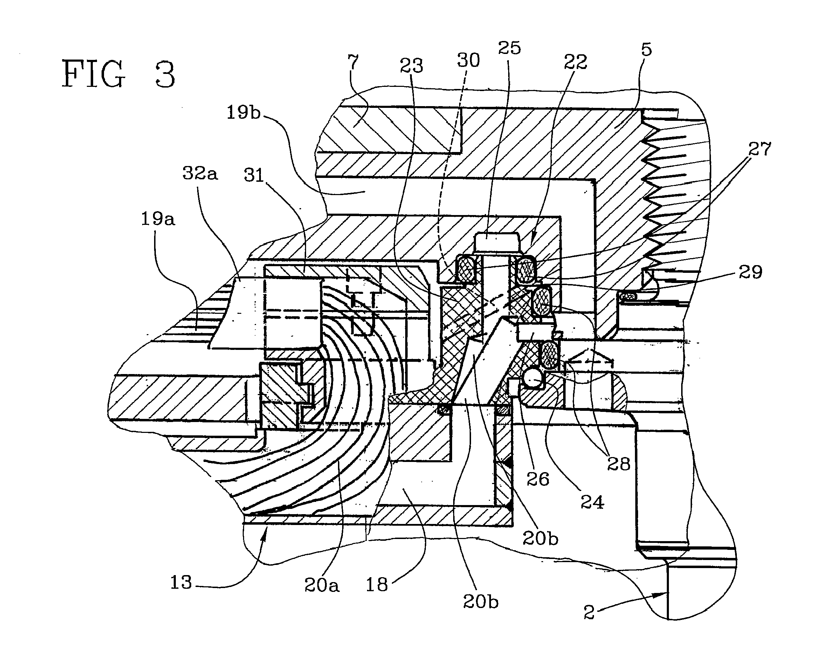

In particular, as better viewed from Fig. 3, the intermediate length 20b of each pneumatic distribution line 15b is preferably obtained within a rotating distributor 22 comprising an annular element 23 extending around the kingpin 2, preferably rotatably engaged around the latter by a crown of balls 24 and rigidly carrying the coupling member 13.

At least one of said proximal length 18b and distal length 19b of each pneumatic distribution line 15b is connected to the respective intermediate length 20b by a connecting groove 25, 26 extending concentric with the geometric axis S of the kingpin 2. More particularly, a first 25 and a second 26 connecting grooves are preferably provided; they are of circular extension and are formed in the base body 5 and/or in the annular element 23. Terminating at the first connecting groove 25 is the intermediate length 20b and distal length 19b of the first pneumatic distribution line 15a, while the intermediate length 20b and distal length 19b of the second pneumatic distribution line 15b terminate at the second connecting groove 26.

For the sake of clarity in the drawings, in the section in Fig. 3 the intermediate lengths 20b of both the pneumatic distribution lines 15b are shown, even if said intermediate lengths are located at circumferentially spaced apart positions from each other within the annular element 23.

Following the angular rotations performed by the coupling member 13 relative to the kingpin 2, the intermediate lengths 20b of the pneumatic distribution lines 15b move relative to the respective connecting grooves 25, 26 keeping a fluid communication between the proximal length 18a, 18b and the distal length 19a, 19b also in the presence of said rotations.

Interposed between the annular element 23 and the base body 5 is a first 27 and a second 28 pairs of sealing rings extending concentric with the geometric axis X of the kingpin 2. The rings of each pair 27, 28 are disposed on opposite sides relative to the first 25 and second 26 connecting grooves respectively, to hermetically insulate the fluid communication between the respective intermediate length 20b and the connecting groove from the surrounding atmosphere.

Between respectively adjacent sealing rings respectively belonging to the first 27 and second 28 pairs, an annular vent gap 29 is defined from which a discharge duct 20 extends, said duct opening into the surrounding atmosphere through the annular element 23. Therefore, in case of accidental breaking of one of the sealing rings 27, 28, escape of fluid under pressure from the corresponding pneumatic distribution line 15b, that can be detected by suitable sensors, can be deviated through the discharge duct 30 without any risk of the other pneumatic distribution line being invaded, thereby creating malfunctions or damages to the user devices interlocked therewith.

The electric distribution lines 15a have the respective intermediate lengths 20a extending through at least one connecting element 31 rotatably carried by the coupling member 13. In more detail, the connecting element 31 is rotatably in engagement with the annular element 23, and is elbow-shaped so as to impose a deviation through 90° to the electric distribution lines 15a at the passage point between the respective intermediate lengths 20a and distal lengths 19a.

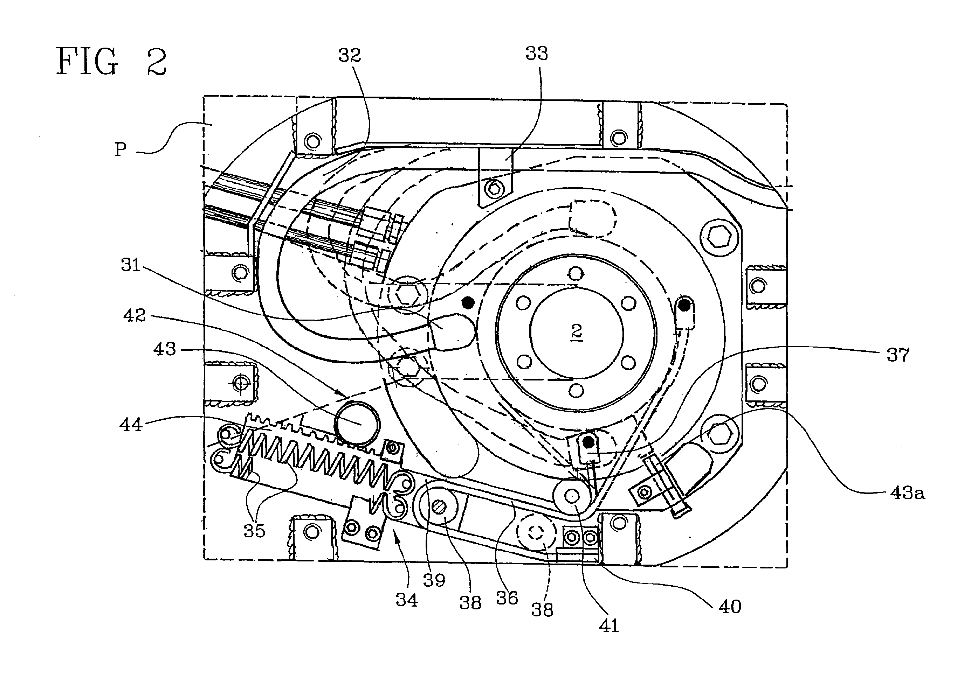

The distal lengths 10a of the electric distribution lines 15a, preferably joined together in the form of a multipolar cable inside an outer sheath 32a, extend from the elbow-shaped connecting element 31 in an arched form, so as to define a U-shaped flexible portion 32 in a plane orthogonal to the rotation axis (Fig. 2), delimited between the elbow-shaped connecting element 31 and a bracket 33 for fastening to the semi-trailer chassis 3a. The arched flexible portion 32 has a length sufficient to follow the angular rotations performed by the coupling member 13 around the axis of the kingpin 2, without transmitting too many stresses to the conductors constituting the electric distribution lines 15a. These angular rotations can take place for example according to a travel equal to ± 110° starting from a centring position at which the coupling member 13 is substantially in alignment with the longitudinal extension of the semi-trailer.

Spring means 34 is preferably provided to counter said angular rotations, so as to automatically bring the coupling member 13 back to the centring position when the semi-trailer is disengaged from the fifth wheel FW. The spring means 34 comprises one or more pull springs 35 operating on a return rope 36 having a first end 37 engaged to the annular element 23 or other anchoring point that is fixed relative to the coupling member 13. More particularly, the pull springs 35 operate on the return rope 36 through an idler pulley 38 mounted on a support 39 submitted to the action of the springs themselves. The return rope 36 having a second end 40 anchored to a fixed point relative to the chassis 3a of the semi-trailer, extends along a U-shaped path around the idler pulley 38, to reach the annular element 23 passing around an auxiliary idler element 41 that is fixed relative to the chassis 3a of the semi-trailer. Each rotation of the coupling member 13 in either way starting from the centring position imposes, through the return rope 36, shifting of the idler pulley 38 against the action of the return springs 35 consequently tending to bring the coupling element 13 itself back to the centring position.

Sensor means 42 can be provided to detect and signal the angular positioning of the coupling member 13, so as to enable control of possible auxiliary steering devices for the wheels of the semi-trailer or other servosystems. In the example shown, this sensor means comprises an encoder 43 driven by a rack 44 integral with the support 39 of the idler pulley 38 to detect the positioning taken by the idler pulley 38 itself depending on the angular orientation of the coupling member 13 relative to the centring position. A switching sensor 43a emits a signal each time the coupling member 13 goes beyond the centring position, so as to recognise whether shifting of the coupling member 13 took place towards one side or towards the other side with respect to the centring position.

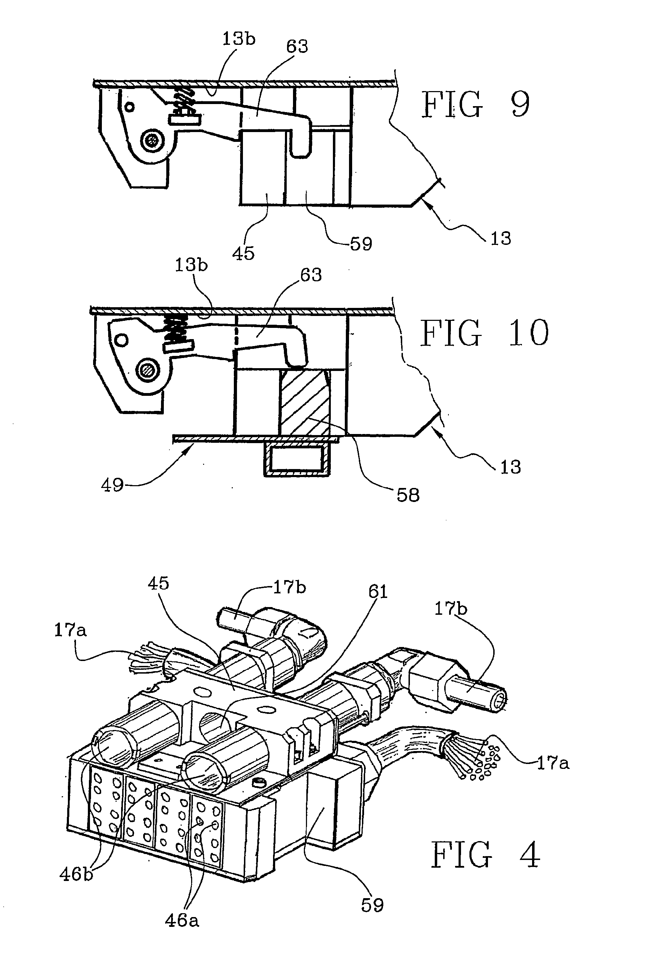

Connection between the distribution lines 15a, 15b and feeding lines 17a, 17b coming from the tractor can be advantageously carried out by a connector 45 (Fig. 4) carrying fitting seats 46a, 46b that are respectively electric and pneumatic, connectable to the feeding lines themselves and each designed to receive in engagement one of the connecting terminals 16a, 16b carried by the distribution lines.

Actuating members 47 fastened to the lower part of the fifth wheel FW act on the connector 45 to selectively take it between a work condition at which the fitting seats 46a, 46b are each operatively in engagement with one of the electric 16a and pneumatic 16b terminals carried by the coupling member 13, and a rest condition at which the connector 45 itself is disengaged from the coupling member 13 and preferably in engagement with a protection element 48 fastened relative to the fifth wheel FW, so as to protect the fitting seats 46a, 46b against entry of dust and dirt.

The actuating members 47 preferably comprise a gripping element 49 adapted to engage the connector 45 to translate it from the work condition to the rest condition and vice versa, and to release the connector 45 itself leaving it in engagement relationship with the connecting terminals 16a, 16b in the work condition.

In more detail, the gripping element 49 is slidably guided on vertical columns 50 carried by a support 51 in turn guided along horizontal columns 52 supported by a fixed structure 53 engaged under the fifth wheel FW.

First actuators 54 carried by the fixed structure 53 operate on the support 51 to cause translation of the gripping element 49 in a horizontal direction, i.e. in parallel to the insertion direction of the fitting seats 46a, 46b on the connecting terminals 16a, 16b. Second actuators 55 carried by the support 51 operate through idle levers 56 on the gripping element 49 to cause translation of the latter in a vertical direction, perpendicular to said insertion direction.

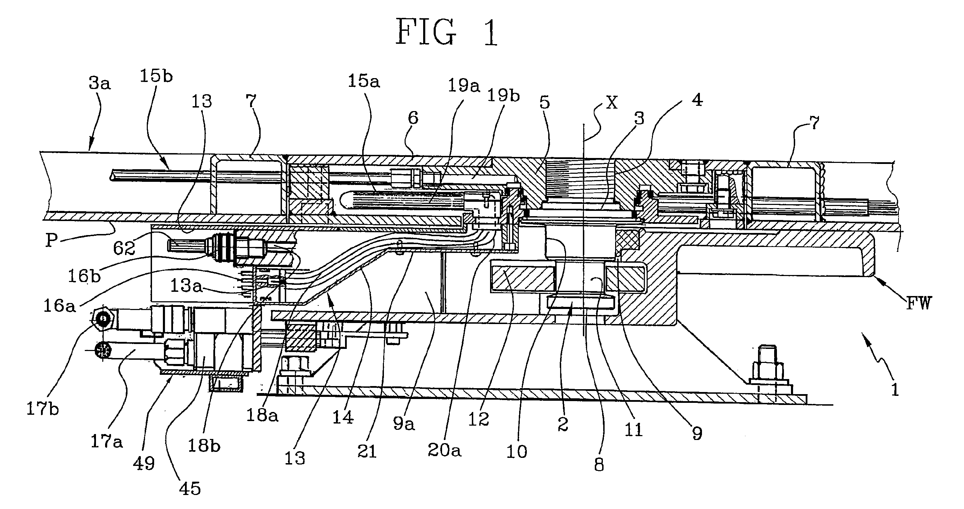

Actuation of connector 45 carried by the gripping element 49 between the rest condition and the work condition and vice versa consequently takes place according to a substantially C-shaped path in a vertical plane. In particular, as viewed from Fig. 1, in the rest condition the connector 45 is positioned with a front wall 57 thereof on which the fitting seats 46a, 46b open, against the protection element 48. The gripping element 49 retains the connector 45 by a pair of keys 58 fitted into respective vertical slots 59 provided on two opposite sides of the connector 45, so as to prevent horizontal movements of the connector 45 itself relative to the gripping element 49. A locking device 60 for example comprising a latch pushed by a spring, is inserted in a notch 61 accessible through a rear side of the connector 45, to hinder vertical movements of the connector 45 itself relative to the gripping element 49.

When, at the end of the operation for coupling the semi-trailer on the fifth wheel FW through closure of the coupling mechanism 12 on the head 8 of the kingpin 2, the connector 45 must be operatively engaged to the coupling member 13, the first 54 and second 55 actuators are sequentially operated to move the gripping element 49 and the connector 45 away from the protection element 48 and, subsequently, in a vertical direction towards the lower surface of the semi-trailer. The connector 45 comes in abutment against a top wall 13b of the coupling member 13, and the first actuators 54 subsequently cause a new horizontal translation of the gripping element 49 in the direction of the kingpin 2, so as to determine engagement of the fitting seats 46a, 46b on the electric 16a and pneumatic 16b connecting terminals carried by the coupling member 13. Concurrently with the above described operation, a locating element 62 projecting from the front wall of the supporting base 13a acts on the locking latch 60 releasing it from the notch 61 provided in the connector 45. Upon the action of the second actuators 55, the gripping element 49 can be disengaged from the connector 45 by a vertical-descent movement, during which the keys 58 slip off the respective slots 59. Disengagement of the keys 58 enables a pair of blades 63 or other suitable coupling devices to accede to the slots 59 of connector 45, which blades are oscillatably carried by the coupling member 13 to retain the connector 45 in the operating condition preventing accidental disengagement of the latter from the connecting terminals 16a, 16b.

The connector 45 therefore remains steadily anchored to the coupling member 13, ensuring continuity between the feeding lines 17a, 17b and distribution lines 15a, 15b. Due to the absence of mechanical constraints between the fifth wheel FW and the connector 45 in the work condition, the connector 45 is prevented from being submitted to anomalous stresses by effect of unavoidable relative movements taking place between the fifth wheel FW and the kingpin 2 and, consequently the coupling member 13 during the vehicle running.

Thus, more reliability in coupling is ensured.

When connector 45 must be disengaged from the coupling member 13, the first 54 and second 55 actuators are operated in reverse sequence with respect to the previously described one with reference to the coupling operation. By an ascent movement of the gripping element 49, the keys 58 are inserted into the longitudinal slots 59 provided in connector 45, so as to act on the locking blades 63 disengaging them from the connector 45 itself. Then a horizontal movement is transmitted to the gripping element 49 to release the connector 45 from the connecting terminals 16a, 16b, and simultaneously allow insertion of the locking latch 60 into the notch 61 disengaged by the locating element 62.

The connector 45 is therefore steadily anchored to the gripping element 49 to be brought back to the rest condition in engagement relationship against the protection element 48.

## Claims

1. A device for coupling a semi-trailer to a tractor, comprising:
- a knuckle pin or kingpin (2) having an anchoring portion (3) to be fixed to a chassis (3a) of a semi-trailer and a head (8) projecting downwards relative to a rest plane (P) of the semi-trailer, and suitable for operative engagement by a fifth wheel (FW) carried by a tractor;
- a coupling member (13) rotatably engaged around a geometric axis (X) of the kingpin (2) and carrying connecting terminals (16a, 16b) each connectable to a feeding line (17a, 17b) coming from the tractor;
- distribution lines (15a, 15b) each extending from one of the connecting terminals (16a, 16b) and each connectable with a user device carried by the semi-trailer;
**characterised in that**:
- each of said distribution lines (15a, 15b) has a proximal length (18a, 18b) extending from the respective connecting terminal (16a, 16b) towards the kingpin (2), an intermediate length (20a, 20b) rising up on the continuation of the proximal length (18a, 18b) to pass through the rest plane (P) of the semi-trailer on the fifth wheel (FW), and a distal length (19a, 19b) connectable to said user device and extending in the continuation of the intermediate length (20a, 20b) away from the kingpin (2).

2. A device as claimed in claim 1, wherein the intermediate length (20a, 20b) of the distribution lines (15a, 15b) is disposed close to the kingpin (29:

3. A device as claimed in one or more of the preceding claims, wherein a diametrically external surface (5) of the anchoring portion (3) of the kingpin (2) has a threading (4) for operative engagement with a base body (5) rigidly connectable to a chassis (3a) of the semi-trailer, above said rest plane (P).

4. A device as claimed in one or more of the preceding claims, wherein the intermediate length (20a, 20b) of the distribution lines (15a, 15b) is formed through an annular element (23) extending around the kingpin (2).

5. A device as claimed in one or more of the preceding claims, wherein the connecting terminals (16a, 16b) carried by the coupling member (13) are oriented radially away from the kingpin (2).

6. A device as claimed in one or more of the preceding claims, wherein said distribution lines (15a, 15b) comprise electric conductors terminating at said connecting terminals (16a, 16b), the intermediate lengths (20a, 20b) of the distribution lines (15a, 15b) themselves being engaged through at least one elbow-shaped connecting element (31) rotatably in engagement relative to the coupling member (13).

7. A device as claimed in claim 6, wherein the electric conductors in the distal length (19a, 19b) of said distribution lines (15a, 15b) extend from the elbow-shaped connecting element (31) along a path of arched conformation (32), to follow relative angular rotations between the coupling member (13) and the kingpin (2) around said geometric axis (X).

8. A device as claimed in one or more of the preceding claims, wherein said distribution lines (15a, 15b) comprise at least one pneumatic duct, wherein at least one of said proximal length (18a, 18b) and distal length (19a, 19b) communicates with the intermediate length (20a, 20b) by a connecting groove (25?) extending concentric with the geometric axis (X) of the kingpin (2), to maintain a fluid communication between the proximal length (18a, 18b) and the distal length (19a, 19b) of the respective distribution line (15a, 15b) in the presence of angular rotations of the coupling member (13) relative to the kingpin (2).

9. A device as claimed in claim 8, comprising at least one first connecting groove (25) and a second connecting groove (26) extending concentric with the geometric axis (X) of the kingpin (2) so that each of them maintains a fluid communication between the proximal length (18a, 18b) and the distal length (19a, 19b) of a respective distribution line (15a, 15b), and further comprising a discharge duct (30) communicating with the external atmosphere and with a vent gap (29) defined between a first (27) and a second (28) pair of sealing rings, each operatively interposed between one of said first (25) and second (26) connecting grooves and the vent gap (29) itself.

10. A device as claimed in one or more of the preceding claims, further comprising spring means (34) to resist relative angular rotations between the coupling member (13) and the kingpin (2) around said geometric axis (X) wherein said spring means (34) operates on a return rope (36) having one end (37) engaged at a fixed anchoring point relative to the coupling member (13), and preferably extendng along a U-shaped path around at least one idler pulley (38) movable against said spring means (34) following said angular rotations.

11. A device as claimed in one or more of the preceding claims, further comprising:
a connector (45) carrying fitting seats (46a, 46b) each connectable to one of said feeding lines (17a, 17b), said connector (45) being susceptible of engagement with the coupling member (13) through sliding in a radial direction towards the kingpin (2),
a gripping element (49) to be removably engaged with the connector (45), and
actuating members (47), preferably fixed relative to the fifth wheel (FW), operating on the gripping element (49) to take the connector (45) between a work condition, at which said fitting seats (46a, 46b) are each operatively engaged with one of the connecting terminals (16a, 16b) carried by the coupling member (13), and a rest condition at which the connector (45) is disengaged from the coupling member (13).

12. A device as claimed in claim 11, wherein actuation of the connector (45) between the work condition and rest condition substantially takes place along a C-shaped path in a vertical plane.

13. A device as claimed in one or more of claims 11 to 12, further comprising latching devices (63) operatively carried by the coupling member (13) to retain the connector (45) in the work condition.

14. A device as claimed in claim 13, further comprising devices (60) for locking the connector (45) on the gripping element (49), said locking devices (60) being oscillatably carried by the gripping element (49) and movable upon the action of a locating element (62) carried by the coupling member (13) to disengage the gripping element (49) from the connector (45) in the work condition.

15. A semi-trailer comprising a coupling device (13) as claimed in one or more of the preceding claims.
